(19) Europäisches Patentamt
European Patent Office
Office européen des brevets

(11) **EP 3 106 580 B1**

(12) **EUROPEAN PATENT SPECIFICATION**

(45) Date of publication and mention
of the grant of the patent:
**29.04.2020  Bulletin 2020/18**

(21) Application number: **15397529.7**

(22) Date of filing: **16.06.2015**

(51) Int Cl.:
*E04B 1/76* $^{(2006.01)}$        *B32B 5/02* $^{(2006.01)}$
*B32B 5/08* $^{(2006.01)}$        *B32B 7/12* $^{(2006.01)}$
*B32B 27/08* $^{(2006.01)}$       *B32B 27/12* $^{(2006.01)}$
*B32B 27/30* $^{(2006.01)}$       *B32B 27/32* $^{(2006.01)}$
*B32B 27/40* $^{(2006.01)}$       *E04C 2/24* $^{(2006.01)}$

(54) **A COVERING FOR INSULATION PANELS FOR EXTERNAL THERMAL INSULATION COMPOSITE SYSTEM**

ABDECKUNG FÜR ISOLATIONSPLATTEN FÜR EXTERNES WÄRMEDÄMMVERBUNDSYSTEM

REVÊTEMENT POUR PANNEAUX ISOLANTS POUR SYSTÈME COMPOSITE D'ISOLATION THERMIQUE EXTERNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.12.2016  Bulletin 2016/51**

(73) Proprietor: **Walki Group Oy**
**02170 Espoo (FI)**

(72) Inventors:
• **RINKINEN, Juuso**
  **37600 VALKEAKOSKI (FI)**
• **KORPELA, Heikki**
  **37600 VALKEAKOSKI (FI)**
• **KOTALA, Saija**
  **37600 VALKEAKOSKI (FI)**

(74) Representative: **Berggren Oy, Tampere**
**Visiokatu 1**
**33720 Tampere (FI)**

(56) References cited:
**EP-A1- 2 333 180     EP-A1- 2 404 750**

## Description

Field of the Invention

The invention relates to a covering for an insulation panel of an external thermal insulation composite system (ETICS). The invention relates to a thermal insulation elements of an external thermal insulation composite system. The invention relates to a wall of a building.

Background of the Invention

External thermal insulation composite system (ETICS) refers to external building systems incorporating renders and thermal insulation. An ETICS is a design system comprising a combination of factory-made products comprising of one base coat, one type of thermal insulation product and specified adhesives, reinforcements, finishing coats and mechanical fixing devices (if applicable) delivered by a system holder as a kit, which is applied on site. ETICS can be used to improve the energy efficiency of both existing and new buildings.

The thermal insulation product of ETICS is typically delivered in the form of thermal insulation element. Various different thermally insulating materials are used in thermal insulation elements, such as polyurethane (PU, PUR, PIR), polystyrene (PS, EPS, XPS) and mineral wool.

Rendering, such as mortar, is applied onto an outer wall structure to smoothen the outer wall. Such an outer wall structure thus remains in between the thermal insulation and the rendering. Such a construction procedure, however, consumes time and space.

Summary of the Invention

It has been observed, that a separate outer wall structure can be dispensed with, provided that the rendering can be applied directly onto the thermal insulation element. Thus time and space can be saved.

However, the application of mortar onto such elements requires that the surface of the thermal insulation element is configured to receive mortar. According to an embodiment of the invention, a surface of a covering for insulation panels is fibrous and non-woven, whereby the surface is configured to receive mortar.

Moreover, thermal insulation materials are typically spacious, i.e. they comprise a lot of gas, such as air (e.g. in mineral wool) or pentane (e.g. in polyurethane). Thermal insulation properties of the material degrade, if the gas may diffuse out of the thermal insulation material. Thus, gas diffusion out of the thermal insulation panel in itself is a problem. Moreover, the rendering that is applied onto thermal insulation material may cause stress, e.g. due to its mass, that tends to press the thermal insulation material thereby pressing also the insulating gas out of the material. In this way, the rendering may increase the diffusion rate of the gases from an insulation panel. Moreover, the gas diffusing out of the panel may degrade the adhesion and other properties of the rendering. To reduce also these effects, an embodiment of a covering for insulation panels comprises a multilayer structure having a core, the core being gas tight at least to some extent, and the covering further comprising a surface that is configured to receive rendering.

Still further, another surface of the covering for insulation panels is configured to be applied on a thermally insulating core of a thermal insulation element, such as a polyurethane element. The material of this other surface may be selected to adhere well to the insulation material.

The features of the covering are detailed in the independent claim 1. Other claims 2-15 disclose preferred embodiments.

The features of the preamble of claim 1 are known from document EP 2 404 750 A1.

Description of the Drawings

Figs. 1a to 1d
show embodiments of a covering for an insulation element
Figs. 2a and 2b
show embodiments of a thermal insulation element, and

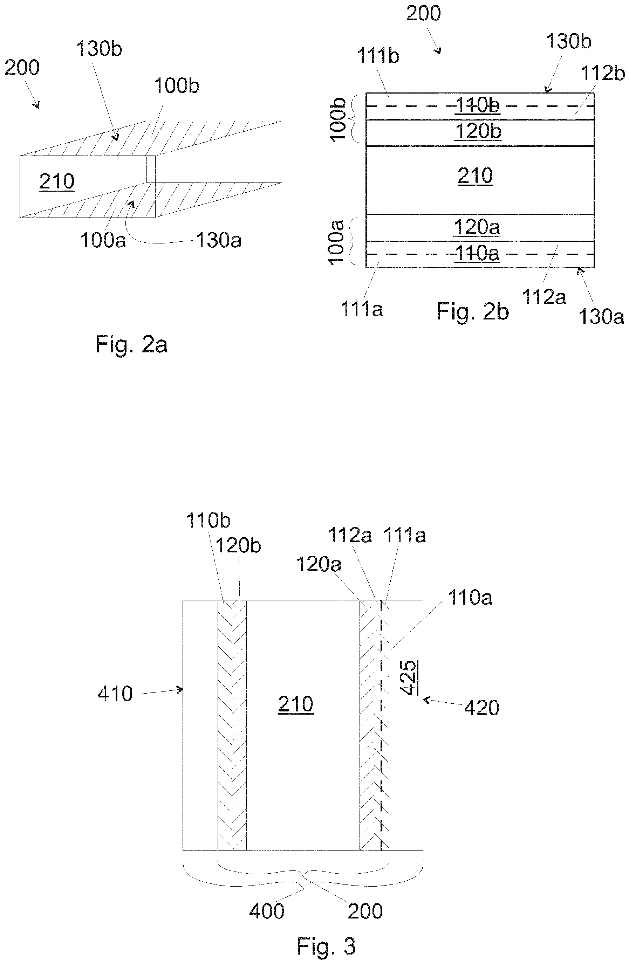

Fig. 3 shows a wall structure wherein a thermal insulation element is arranged in between an outer wall and an inner wall.

Detailed Description of the Embodiments

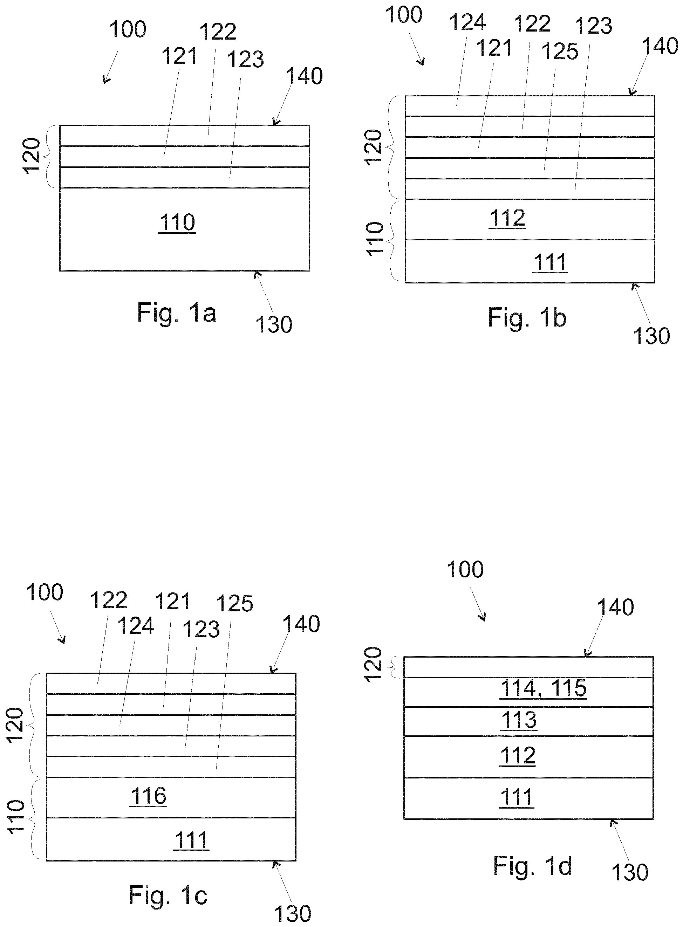

Referring to Figs. 1a to 1d, a covering 100, which is suitable for a thermal insulation element is provided. The thermal insulation element may be e.g. a thermal insulation panel of an external thermal insulation composite system. The covering 100 comprises a base structure having a surface 130 onto which rendering can be applied. The covering further comprises a surface 140 that can be attached to a core of a thermal insulation element.

To prevent gas from diffusing out of a core of a thermal insulation element, and thereby to improve the thermal insulation properties of the thermal insulation element on the long term, the covering 100 further comprises a polymer multilayer structure 120 acting as gas diffusion barrier.

By using such covering 100 on a thermal insulation element, rendering can be applied directly onto the covering 100 of the thermal insulation element and a separate outer wall structure can be dispensed with. Moreover, the structure prevents gas from diffusing out of the thermal insulation element, thereby improving to ability of the thermal insulation element to keep its spacious structure also under the pressure generated by the rendering, and also in long term.

An example of a covering 100 is shown in Fig. 1a. The covering 100 comprises a support 110 and polymer multilayer structure 120.

The gas tightness of the polymer multilayer structure 120 depends mainly on the inner structure of the materials. The multilayer structure 120 comprises a core 121 that may have been made by extruding the core 121 or by coextruding the core 121 with another layer. Alternatively, the core may have been casted. Extrusion results in mono or multilayer films free from holes or other perforations. Moreover, extrusion or casting results in mono or multilayer films free from fibres. In other words, extrusion results in non-fibrous mono or multilayer films free from perforations or holes. Thus, an extruded or extrudable (or coextruded or coextrudable) film is gas tight at least to some extent. At least a region of the polymer multilayer structure should be free from perforations. The area of the region may be e.g. at least 0.25 $m^2$ or at least 1 $m^2$. Preferably, at least the core layer 121 of the polymer multilayer structure 120 is free from perforations, at least to the extent discussed above. More preferably, the polymer multilayer structure 120 is free from perforations, at least to the extent discussed above.

In this description, a fibre refers to a piece of material having a length, a width and a thickness, wherein the length is at least ten times the width, and the length is at least ten times the thickness. A fibrous material is material that comprises fibres. Fibres may be bonded together or into a matrix; however, an interface is typically formed in between two fibres. In contrast, a single fibre is typically free from internal interfaces. The width and/or thickness of a fibre is typically at least 3 $\mu$m; as opposed e.g. to polymer chains. Moreover, fibrous materials typically cannot be made by casting, extrusion or coextrusion, since extrusion or coextrusion can be used to manufacture films. Moreover, casting, extrusion or coextrusion can be used to manufacture non-perforated films.

The gas tightness of the polymer multilayer structure 120 depends also on the aerial mass density (i.e. specific mass) thereof. The specific mass (i.e. aerial mass density) is measured in units of mass per area, such as g/$m^2$. The area, on the other hand refers to the cross sectional area, the cross section itself having a surface normal parallel to thickness of the covering 100 (and the polymer multilayer structure 120 and the base structure 110). Moreover, these values refer to the covering when in substantially planar form, even if the covering could be e.g. rolled. In addition, the gas tightness depends on the materials of the polymer multilayer structure. Preferably, the specific mass of the core 121 is at least 1 g/$m^2$ or at least 2 g/$m^2$. Thus, the core 121 is gas tight at least to some extent.

The gas tightness of a film is commonly measured as an oxygen transmission rate (OTR). The more gas tight the film, the less oxygen is transmitted through it in a test during a period of time. The OTR and is measurement is defined e.g. in standard ASTM-D3985 or ASTM-F1927. The OTR, as discussed in this description is the oxygen transmission rate as defined in the latest version (on April 1st 2015) of the standard ASTM-D3985, i.e. ASTM D3985 - 05(2010)e1. The OTR values in this application refer to this standard.

OTR is determined from a test by the equation

$$OTR = \frac{\Delta V d}{A t \Delta p},$$

wherein $\Delta V$ is the volume of diffused oxygen, d the film thickness, A the film area, t the time, and $\Delta p$ the difference between partial pressures of oxygen on different sides of the film. The measurements are typically performed at the temperature 23 °C. Often the measured OTR is normalized to correspond to a partial pressure difference of 1 atm, whereby some reported values of OTR lack the unit of pressure. Moreover, often a standard thickness d is used in the measurements, whereby the OTR may also lack a unit of thickness. A typical thickness for measurements is 30 $\mu$m.

In addition to gas tightness, the covering preferably also acts as a barrier for water vapour diffusion. By preventing water vapour from diffusing e.g. from the rendering into the thermal insulation material, the insulation material does not become deteriorated by the moisture of the rendering.

Experiments on the amount of vapour diffused through the film can be conducted. Water vapour transmission rate can be calculated from the amount of diffused water through a film in a time. The amount is proportional to the area of the film, the partial pressure difference of vapour on different sides of the film, and time; and inversely proportional to the film thickness. Thus, the result describing the vapour diffusivity of the material of the film may alternatively be given as

$$WVTR = \frac{\Delta m d}{A t \Delta p},$$

wherein WVTR is the water vapour transmission rate, $\Delta m$ the mass of diffused water, d the thickness of the film, A the area of the film, t the time, and $\Delta p$ the partial pressure difference of water vapour on different sides of the film. Often, the thickness is not included in WVTR, instead, the value of diffused water vapour is given in connection with the film thickness. Moreover, often, the pressure difference is not given, instead, the values of relative humidities on both sides of the film are given. Quite commonly the environment on one side is dry or substantially dry, whereby the relative humidity on one side may be less than 5 %, such as 0 %. A method to measure WVTR is described e.g. in the standard EN-ISO 12572 (version 12572:2001). The WVTR values in this application refer to this standard.

Referring to Fig. 1a, in addition to the core layer 121, the polymer multilayer structure 120 of the covering 100 comprises a first tie polymer layer 122 and a second tie polymer layer 123. The core layer 121 is arranged in between the first tie polymer layer 122 and the second tie polymer layer 123. The first tie polymer layer 122, the second tie polymer layer 123, and the core layer 121 are joined to each other.

The first tie polymer layer 122 can be used to attach

- the covering 100 to a thermal insulation element or
- further polymer layers to the polymer multilayer 120 structure.

The second tie polymer layer 123 can be used to attach

- a base structure 110 to the polymer multilayer 120 structure or
- further polymer layers to the polymer multilayer 120 structure.

In an embodiment, the polymer multilayer structure 120 itself is free from fibrous layers. In an embodiment, the multilayer structure 120 itself consists of layers that can be manufactured by at least one of casting, extrusion and coextrusion

Referring to Fig. 1a, the covering 100 further comprises a base structure 110. The base structure 110 is joined to the polymer multilayer structure 120. As for the terms first and second tiepolymer layers (122 and 123, respectively), the second tiepolymer layer 123 is arranged in between the core 121 and the base 110 (see Figs. 1a-1c).

The base structure 110 has at least two functions:

- to mechanically support the polymer multilayer structure 120, and
- to receive rendering during construction.

To receive rendering, the base structure 110 comprises a fibrous non-woven (NW) layer 111. Moreover, the covering 100 comprises a first surface 130 and an opposite second surface 140. Still further, a surface of the non-woven layer 111 constitutes the first surface 130 of the covering 100. In this way, the first surface 130 of the covering 100 is configured to receive rendering.

The second surface 140 is configured to be attached to a core 210 of a thermal insulation element 200 (See Fig. 2a). Examples of materials that attach well to the core 210 include tiepolymers and polyethylene based materials. Therefore, the second surface 140 of the covering 100 is comprised by one of

- the first tiepolymer layer 122 (see Figs. 1a and 1c), or
- a polyethylene (PE) based layer 124 of the polymer multilayer structure 120.

As indicated above, the first tiepolymer layer 122 may be, before attachment to a thermal insulating element, a surface layer of the covering 100. However, it is called a tiepolymer layer, since when applied to a thermal insulation element, also the first tiepolymer layer 122 ties two materials together, namely the covering 100 and the core 210 of the thermal insulation element 200. However, when the first tiepolymer layer 122 comprises the second surface 140, the first tiepolymer layer 122 may be seen as an adhesive layer for attaching the covering 100 to the core 210.

Here, the term tiepolymer refers to polymers that tie two dissimilar polymers together. Examples include anhydride-modified polyolefins. Tiepolymers can be chosen according the polymer materials they should bond together. Commercial examples include tiepolymers for ethylene vinyl alcohol (EVOH), low-density polyethylene (LDPE), linear low-density polyethylene (LLDPE), and high-density polyethylene (HDPE).

Here, the term polyethylene based layer refers to a layer comprising polyethylene, e.g. comprising at least one of low-density polyethylene (LDPE), linear low-density polyethylene (LLDPE), and high-density polyethylene (HDPE).

When the second surface 140 is comprised by an aforementioned layer, many thermally insulating materials bond well to the second surface. In particular, such a surface bond very well to polyurethane (PU), such as rigid polyurethane (PUR) or polyisocyanurate (PIR). Thus, such a second surface 140, in combination with sufficiently gas tight polymer multilayer 120, is particularly feasible in preventing gas from diffusing out of polyurethane insulator.

As for the gas tightness of the polymer multilayer structure 120, it has been found that ethylene vinyl alcohol (EVOH) or poly vinyl alcohol (PVA); or a combination thereof; provides for good gas tightness. Thus, in accordance with the claimed invention, the core 121 comprises at least one of ethylene vinyl alcohol (EVOH) and poly vinyl alcohol (PVA). Moreover, preferably, the specific mass of the core 121 is at least 2 g/m$^2$ to have sufficient gas tightness. The specific mass may be at most 8 g/m$^2$ to have a reasonable flexible covering.

The core 121 may consist of EVOH. The core 121 may consist of PVA. The core 121 may comprise a layer consisting of EVOH and another layer consisting of PVA. The core 121 may be made of a composition comprising PVA and EVOH. The core 121 may consist of a layer consisting of EVOH and another layer consisting of PVA, and optionally a tiepolymer layer in between the PVA and EVOH layers.

It has been observed that with such a selection of materials and thicknesses, the oxygen transmission rate (OTR) remains sufficiently low in order to prevent gas diffusion from the thermal insulation material. Preferably, the OTR of the covering, as described by the standard ASTM 3985 (see above), at the temperature 23 °C, in the pressure 1 atm, and at the relative humidity 50 %, is at most 4.5 ml/m$^2$/day. In these conditions and depending on the material and thickness selections, the OTR may be at most 4 ml/m$^2$/day or at most 3 ml/m$^2$/day.

The core 121 may consist of extrudable PVA. In such a case, the specific mass of the core 121 is preferably from 2 g/m$^2$ to 6 g/m$^2$. In an embodiment, the core 121 comprises from 2 g/m$^2$ to 6 g/m$^2$ PVA.

The core 121 may consist of extrudable EVOH. In such a case, the ethylene monomer content of the EVOH may be from 24 w% to 44 w%. The specific mass of such a core 121 is preferably from 4 g/m$^2$ to 8 g/m$^2$. In an embodiment, the core 121 comprises from 4 g/m$^2$ to 8 g/m$^2$ EVOH.

In case the core 121 comprises both PVA and EVOH, e.g. the core is a two-layer structure as discussed above, the specific mass of such a core 121 is preferably from 3 g/m$^2$ to 7 g/m$^2$.

Also, irrespective of the material of the core, the specific mass thereof may be selected in such a way that the aforementioned OTR is achieved. Suitable specific masses include from 2 g/m$^2$ to 8 g/m$^2$, from 3 g/m$^2$ to 7 g/m$^2$, and from 4 g/m$^2$ to 6 g/m$^2$.

As for the material of the first tiepolymer layer 122 and/or the second tiepolymer layer 123, such a tiepolymer layer (or both of them) may comprise at least one of

- polyethylene (PE), such as low-density polyethylene (LDPE) or high-density polyethylene (HDPE),
- polypropylene (PP), and
- a copolymer, terpolymer, or an ionomer comprising linear low-density polyethylene (LLDPE), low-density polyethylene (LDPE).

As indicated above, the polymer of the tielayer (i.e. the tiepolymer) may be grafted to improve the tying, e.g. by modifying a part of the corresponding polymer with anhydride or other suitable grafting agent. However, the materials for these layers 122, 123 may be selected independently according to the material of the neighbouring layers. The second tiepolymer layer 123 may be made of the same material as the first tiepolymer layer 122. In case the first tiepolymer layer comprises the second surface 140, the material of the first tiepolymer may be selected according to the thermal insulation material such as polyurethane.

The differences between low-density polyethylene (LDPE), linear low-density polyethylene (LLDPE), and high-density polyethylene (HDPE) are reflected e.g. in their density (i.e. mass/volume). The density of HDPE may range from 0.94 g/cm$^3$ to 0.97 g/cm$^3$. The density of LLDPE may range from 0.92 g/cm$^3$ to 0.95 g/cm$^3$. The density of LDPE may range from 0.91 g/cm$^3$ to 0.94 g/cm$^3$. In addition, HDPE has a low degree of branching. LLDPE has a significant number of short branches. LDPE has a high degree of short and long chain branching, whereby LDPE does not pack into a crystal structure as well as some other polyethylenes.

Referring to Figs. 1b and 1c, the polymer multilayer structure 120 may comprise further polymer layers (124, 125). Such layers may be made by casting, extrusion or coextrusion, i.e. they may be castable or extrudable. Such a polymer layer (124, 125) may be arranged in between the first tiepolymer layer 122 and the second tiepolymer layer 123.

The further polymer layer may comprise at least one of

- polyethylene (PE), such as high-density polyethylene (HDPE), linear low-density polyethylene (LLDPE), low-density polyethylene (LDPE),
- a metallocene based on polyethylene (PE),
- polypropylene (PP),
- copolymer of polypropylene (PP), and
- polyamide (PA), such as PA-6 or PA-66.

The copolymer of PP may comprise PP and PE, such as PP and LDPE. The LDPE content of the copolymer may be from 20 w% to 30 w%.

The polymer multilayer structure 120, including also the tiepolymer layers 122, 123, and optionally also other layers 124, 125 of the polymer multilayer structure 120, naturally has a larger specific mass than only the core 121. Moreover, in an embodiment, the polymer multilayer structure 120 is manufacturable by coextrusion of all or at least some of the layers thereof. In an embodiment, at least a layer of the polymer multilayer structure 120 is manufacturable by extrusion or by casting of the layer. Still further, individual layers and/or two-or multilayer structures may be bonded together to form the polymer multilayer structure 120.

In accordance with the claimed invention, the polymer multilayer structure 120 has a specific weight of at least 20 g/m$^2$, preferably also at most 50 g/m$^2$. In an embodiment, all the castable, extrudable or coextrudable layers of the polymer multilayer structure 120 in total have a specific weight of at least 20 g/m$^2$, preferably also at most 50 g/m$^2$. In addition, provided that the base structure 110 is free from castable and extrudable films, preferably, the polymer multilayer structure 120, or the castable or extrudable layers thereof, has/have a specific weight of at least 20 g/m$^2$, preferably also at most 50 g/m$^2$. Such a structure may provide for a reasonably low water vapour transmission. In an embodiment, the water vapour transmission rate (WVTR) of the covering 100 is less than 1 g/m$^2$/day at the temperature 23 °C, in the pressure 1 atm, and at the relative humidity 50 %. The WVTR is defined as in the standard ISO 2528 (version ISO 2528:1995). In an embodiment, the water vapour transmission rate (WVTR) of the polymer multilayer structure 120 is less than 1 g/m$^2$/day at the temperature 23 °C, in the pressure 1 atm, and at the relative humidity 50 %. The WVTR is defined as in the standard ISO 2528 (version ISO 2528:1995).

Such a layer, or such layers, have the ability of further improving the gas tightness of the polymer multilayer structure 120. Moreover, such a layer, or such layers, have the ability of further improving the mechanical properties of the structure 120 and/or the runnability of the structure 120 during manufacturing thereof.

As for the base structure 110, the base structure 110 comprises a fibrous non-woven layer 111, wherein the fibrous non-woven layer 111 comprises the first surface 130 (see Figs. 1a-1d). In an embodiment, the fibrous non-woven layer 111 comprises fibrous material comprising one of polypropylene (PP), polyethylene terephthalate (PET), and glass. The fibrous layer 111 may consist of fibrous polymer materials, e.g. PP and PET. The fibrous layer 111 may consist of PP. The fibrous layer may consist of PET. The fibrous layer 111 may comprise or consist of a glass fibre felt.

In an embodiment, the fibrous layer 111 comprises fibrous polymer material, such as PP or PET, and the specific mass of the fibrous layer 111 is from 20 g/m$^2$ to 200 g/m$^2$. In an embodiment, the fibrous layer 111 consists of at least one fibrous polymer material, such as PP or PET, and the specific mass of the fibrous layer 111 is from 20 g/m$^2$ to 200 g/m$^2$.

In an embodiment, the fibrous layer 111 comprises a glass fibre felt having specific mass from 30 g/m$^2$ to 150 g/m$^2$. In an embodiment, the fibrous layer 111 consists of a glass fibre felt having specific mass from 30 g/m$^2$ to 150 g/m$^2$.

Referring to Fig. 1c, the base structure 110 may comprise a support scrim 116. The support scrim 116 may comprise a glass fibre scrim or a polymer scrim, such as a polypropylene (PP) scrim.

Referring to Fig. 1d, the base structure 110 may comprise castable or extrudable polymer film or films (112, 113), which further improve the gas tightness of the covering 100. In an embodiment, all the castable, extrudable or coextrudable layers (112, 133) of the base structure 110 in total have a specific weight of at least 10 g/m$^2$, preferably also at most 30 g/m$^2$.

In addition or alternatively, the base structure 110 may comprise another non-woven layer 114. The other fibrous non-woven layer 114 may comprise fibrous material comprising one of polypropylene (PP), polyethylene terephthalate (PET), and glass. Preferably, the other non-woven layer comprises a glass fibre felt.

In addition or alternatively, the base structure 110 may comprise woven layer 115. The woven layer 115 may comprise fibrous material comprising some polymer material, such as PP and/or PE. The woven layer 115 may comprise woven fibrous polyethylene (PE).

As evident to a skilled person, the base structure may comprise suitable tie layers to improve the adhesion between different layers.

As indicated above, in addition to such castable or extrudable layers of the structure 120, that are arranged in between the tielayers 122, 123, the covering 100 may comprise further gastight (castable, extrudable or coextrudable) layers that are arranged in between the second tie polymer layer 123 and the first surface 130. Such layers (112, 113, 125; see Figs. 1c and 1d) may form a part of the polymer multilayer structure (120) or the base structure (110). Such layers may comprise at least one of tiepolymer, polyethylene (PE) and polypropylene (PP).

To have the preferred properties related to gas tightness and water vapour transmission, preferably, the castable, extrudable or coextrudable polymer layers (121, 122, 123, 124, 125, 113, 114) of the covering 100, in total, have a specific weight of at least 20 g/m$^2$, optionally at most 80 g/m$^2$. How such a specific weight is preferably divided in between the base 110 and the polymer multilayer 120 has been discussed above. Such a structure may provide for a reasonably low water vapour transmission as discussed above.

To improve the fire resistance of the covering 100, an embodiment of the covering comprises some fire retardant. The covering may comprise fire retardant in the base structure 110 and/or in the polymer multilayer structure 120. Examples of suitable fire retardants include ammonium polyphosphate (APP) and alumina trihydrate (ATH). Such fire retardants can be used without other fire retardants or in combination with each other and/or other fire retardants. Preferably the covering is fire resistant according to Euroclass E of the standard EN 13501-01 (revision 2010).

As for manufacturing the covering 100, there are multiple options.

The multilayer structure 120 and the base structure 110 may be manufactured separately, and they may be bonded together after manufacturing them. In the alternative, the layers of the multilayer structure 120 may be coated onto the base structure 110.

As for manufacturing the base structure 110, the process may start with the fibrous non-woven layer 111. Another layer of the layers (112, 113, 114, 115, 116) of the base 110 may be attached (e.g. using adhesive and/or some known bonding techniques, e.g. ultrasound, heating, ultra violet radiation) to the surface of the already made structure (i.e. the layer 111, optionally with at least one other layer); or the other layer (112, 113, 114, 115, 116) may be coated, e.g. by extrusion, onto the already made structure. Moreover, at least two of the other layers (112, 113, 114, 115, 116) may be applied to the surface of the already made structure simultaneously.

As for manufacturing the multilayer structure 120, the layers thereof (121, 122, 123, 134, 125) are preferably coextruded. However, some or all of the layers may be casted or extruded. Moreover, only a part of the structure 120 may be coextruded. The casted and/or coextruded and/or extruded layers may be attached to each other e.g. using adhesive and/or some known bonding techniques, e.g. ultrasound, heating, ultra violet radiation. In addition or alternatively, a layer (121, 122, 123, 134, 125) may be coated onto another layer.

The multilayer structure 120 may be bonded to the base 110 e.g. using adhesive and/or some known bonding techniques, e.g. ultrasound, heating, ultra violet radiation.

In the alternative, a layer, some layers, or all the layers of the multilayer structure 120 may be attached (e.g. using adhesive and/or some known bonding techniques, e.g. ultrasound, heating, ultra violet radiation) to the surface of an already made structure (i.e. the base 110, optionally with at least one layer of the multilayer structure 120), or the other layer/layers may be coated, e.g. by extrusion or coextrusion, onto the already made structure.

The gas tightness of the polymer multilayer structure 120 depends mainly on the inner structure of the materials. The multilayer structure 120 comprises a core 121 that may have been made by extruding the core 121 or by coextruding the core 121 with another layer. Extrusion results in mono or multilayer films free from holes or other perforations. Moreover, extrusion results in mono or multilayer films free from fibres. In other words, extrusion results in non-fibrous mono or multilayer films free from perforations or holes. Thus, an extruded or extrudable (or coextruded or coextrudable) film is gas tight at least to some extent. At least a region of the polymer multilayer structure 120 should be free from perforations. The total area of the perforations, if any are present, is preferably less than 1 % of the area of the polymer multilayer structure 120. The low amount of perforations may manifest itself also as a low oxygen transmission rate (OTR) or water vapour transmission rate (WVTR), values of which have been discussed above.

Referring to Fig. 2a and 2b, the covering 100 can be used to cover a core 210 of a thermal insulation element 200. Thus, the covering can be seen as a part of a thermal insulation element 200. Alternatively, an existing thermal insulation element 200 can be covered by the covering 100.

The thermal insulation element of Figs 2a and 2b comprises a first covering 100a and a second covering 100b both having the properties as discussed above. The coverings 100a and 100b are not necessarily identical. In the element 200, a thermally insulating core 210 is arranged in between the coverings 100a, 100b. Both the coverings 100a, 100b are attached to the insulating core 210 of the element. As discussed above, a covering 100 comprises a first surface 130 (see Fig. 1a), whereby the coverings 100a, 100b both comprise a first surface 130a, 130b respectively. The first covering 100a is attached to the insulating core 210 in such a way that the first surface 130a of the first covering 100a faces away from the thermally insulating core 210. Thereby, a rendering 425 (see Fig. 3) can be applied onto the first surface 130a of the first covering 100a.

Preferably also the second covering 100b is attached to the insulating core 210 in such a way that the first surface 130b of the second covering 100b faces away from the thermally insulating core 210. Thereby, a rendering 425 (see Fig. 3) can be applied either of the first surfaces 130a, 130b. Thus, the element 200 can be used either side facing outside of the building, which simplifies the construction procedures.

To ensure sufficient thermal insulation, the thermally insulating core 210 comprises a thickness of some thermally insulating material. The thickness may be e.g. at least 20 mm, 50 mm, at least 70 mm, or at least 90 mm. The thermal conductivity of the thermally insulating material may be less than 0.05 W/mK or less than 0.04 W/mK according to the standard EN 12667 (version March 2001).

In a preferred embodiment, the covering 100 is attached to a core 210 comprising polyurethane (PU), such as rigid polyurethane (PUR) or polyisocyanurate (PIR). When so used, the layer that comprises the second 140 surface of the covering 100, the layer being a tielayer such as the first tiepolymer layer 122, or a polyethylene based layer, as discussed above, adheres well to the thermally insulating core 210. In a corresponding thermally insulating element 200, the thermally insulating core 210 comprises polyurethane (PU), such as rigid polyurethane (PUR) or polyisocyanurate (PIR). Preferably, at least a surface of the core 210 consists of polyurethane. This ensures good adhesion, since this surface can be joined with the surface 140 of the covering 100.

In order to improve the adhesion, such additives that increase polarity of a polymer material, can be added to the layer of the covering 100 that comprises the second 140 surface of the covering 100. That is to say, to the surface layer of the covering 100 that is to be joined to the thermally insulating core 210. Such additives include silanes.

Referring to Fig. 3, such a thermal insulating element 200 can be used in a wall 400. The wall 400 of Fig. 3 comprises a thermal insulation element 200 as discussed above. The wall also comprises an inner side 410 and an outer side 420. In Fig. 3, rendering 425 has been arranged on the outer side 420 of the wall 400. The rendering 425 is arranged on a non-woven layer (111a, 111b) of a covering (100a, 100b) of the thermal insulation element 200. Thus, the rendering 425 is arranged on a first surface (130, 130b) of a covering (100a, 100b) of the thermal insulation element 200.

Provided that in the element 200, both the first surfaces 130a, 130b of both the coverings 100a, 100b faces away from the thermally insulating core 210, alternatively, the rendering could be applied onto the first surface 130b of the second covering 100b.

## Claims

1. A covering (100) suitable for protecting a core (210) of an insulation panel (200) of an external thermal insulation composite system, the covering (100) comprising

   - a base structure (110) comprising a fibrous non-woven layer (111),
- a polymer multilayer structure (120) joined to the base structure (110), the polymer multilayer structure (120) comprising

• a first tie polymer layer (122),
• a second tie polymer layer (123), and
• a core layer (121) in between the first tie polymer layer (122) and the second tie polymer layer (123), the core layer (121)

○ being made of polymer material,
○ having a specific mass of at least 1 g/m$^2$, and
○ being obtainable by casting, extrusion or coextrusion, wherein

• the first tie polymer layer (122), the second tie polymer layer (123), and the core layer (121) are joined to each other, whereby

- the covering (100) comprises a first surface (130) and an opposite second surface (140), the covering (100) being arranged such that
- the fibrous non-woven layer (111) comprises the first surface (130) of the covering (100), whereby
- a rendering (425) can be applied onto the first surface (130) of the covering (100),
- the second surface (140) of the covering (100) can be attached to a core (210) of a thermal insulation element (200), and
- the covering (100) is gas tight at least to some extent,

**characterized in that**

- the core layer (121) comprises at least one of ethylene vinyl alcohol (EVOH) and poly vinyl alcohol (PVA) and
- (i) the polymer multilayer structure (120) is obtainable by coextrusion or (ii) in addition to the core layer (121), also the tie polymer layers (122, 123) of the polymer multilayer structure (120) are obtainable by casting or extrusion, and
- the polymer multilayer structure (120) has a specific weight of at least 20 g/m$^2$.

2. The covering (100) of claim 1, wherein

- the first tie polymer layer (122) or a polyethylene (PE) based layer (124) of the polymer multilayer structure (120) comprises the second surface (140) of the covering (100).

3. The covering (100) of claim 1 or 2, wherein

- the specific mass of the core (121) is at least

2 g/m$^2$, optionally at most 8 g/m$^2$, whereby
- the oxygen transmission rate (OTR) of the covering (121), as described in the standard ASTM 3985, at the temperature 23 °C, in the pressure 1 atm, and at the relative humidity 50 %, is at most 4.5 ml/m$^2$/day.

4. The covering (100) of any of the claims 1 to 3, wherein

- the first tie polymer layer (122) comprises at least one of

• polyethylene (PE), such as low-density polyethylene (LDPE) or high-density polyethylene (HDPE),
• polypropylene (PP), and
• a copolymer, terpolymer, or an ionomer comprising linear low-density polyethylene (LLDPE), low-density polyethylene (LDPE);

optionally,

- also the second tie polymer layer (123) comprises at least one of

• polyethylene (PE), such as low-density polyethylene (LDPE) or high-density polyethylene (HDPE),
• polypropylene (PP), and
• a copolymer, terpolymer, or an ionomer comprising linear low-density polyethylene (LLDPE), low-density polyethylene (LDPE).

5. The covering (100) of any of the claims 1 to 4, wherein

- the polymer multilayer structure (120) has a specific weight of at most 50 g/m$^2$.

6. The covering (100) of any of the claims 1 to 5, wherein the covering (100) comprises a further polymer layer (124, 125) that

- is obtainable by casting, extrusion or coextrusion
- is arranged in between the first tie polymer layer (122) and the second tie polymer layer (123), and
- comprises at least one of one of

• polyethylene (PE), such as high-density polyethylene (HDPE), linear low-density polyethylene (LLDPE), low-density polyethylene (LDPE),
• a metallocene based on polyethylene (PE),
• polypropylene (PP),

- copolymer of polypropylene (PP), and
- polyamide (PA), such as PA-6 or PA-66.

7. The covering (100) of any of the claims 1 to 6, wherein

- the second tiepolymer layer (123) is arranged in between the core (121) layer and the base structure (110), and
- the covering (100) comprises another polymer layer (124, 125, 112, 113)

- obtainable by casting, extrusion or coextrusion,
- arranged in between the second tie polymer layer (123) and the first surface (130), thereby forming a part of the polymer multilayer structure (120) or the base structure (110), and
- comprising at least one of tiepolymer, polyethylene (PE) and polypropylene (PP).

8. The covering (100) of any of the claims 1 to 7, wherein

- the fibrous non-woven layer (111) of the base structure (110) comprises fibrous material comprising at least one of polypropylene (PP), polyethylene terephthalate (PET), and glass.

9. The covering (100) of any of the claims 1 to 8, wherein the fibrous non-woven layer (111) of the base structure (110) comprises

- fibrous polymer material comprising at least one of polypropylene (PP) and polyethylene terephthalate (PET); the non-woven layer (111) having a specific mass from $20 \, g/m^2$ to $200 \, g/m^2$, and/or
- a glass fibre felt having specific mass from $30 \, g/m^2$ to $150 \, g/m^2$.

10. The covering (100) of any of the claims 1 to 9, wherein the base structure (110) further comprises at least one of

- a polymer film (112, 113), such as a polypropylene (PP) film or a polyethylene terephthalate (PET) film,
- another fibrous non-woven layer (114), such as a glass fibre felt,
- a woven layer (115), such as a woven polyethylene (PE) layer, and
- a support scrim (116), such as a glass fibre scrim or a polypropylene scrim.

11. The covering (100) of any of the claims 1 to 10, wherein

- the polymer layers (121, 122, 123, 124, 125, 113, 114) of the covering (100) that have been made by casting, extrusion or coextrusion, in total have a specific weight of at least 20 $g/m^2$, optionally at most 80 $g/m^2$, whereby
- the water vapour transmission rate (WVTR) according to the standard ISO 2528 of the polymer multilayer structure (120) is less than 1 $g/m^2$/day at the temperature 23 °C, in the pressure 1 atm, and at the relative humidity 50 %.

12. The covering (100) of any of the claims 1 to 11, comprising

- some fire retardant; for example the the non-woven layer (111) of the base structure (110) comprises some fire retardant and/or the polymer multilayer structure 120 comprises some fire retardant.

13. A thermal insulation element (200) comprising

- a first covering (100a) of any of the claims 1 to 12,
- a second covering (100b) of any of the claims 1 to 12, and
- a thermally insulating core (210), wherein
- the thermally insulating core (210) comprises some thermally insulating material, the thermal conductivity of the thermally insulating material being less than 0.05 W/mK according to the standard EN 12667,
- the first covering (100b) is attached to the thermally insulating core (210),
- the second covering (100b) is attached to the thermally insulating core (210), and
- the first surface (130a) of the first covering (100a) faces away from the thermally insulating core (210), whereby
- a rendering (425) can be applied onto the first surface (130a) of the first covering (100a).

14. The thermal insulation element (200) of claim 13, wherein

- the thermally insulating core (210) comprises polyurethane (PU), such as rigid polyurethane (PUR) or polyisocyanurate (PIR).

15. A wall (400) comprising,

- the thermal insulation element (200) of claim 13 or 14,
- an inner side (410) and an outer side (420),
- rendering (425) arranged on the outer side (420) of the wall (400), wherein
- the rendering (425) is arranged on the non-woven layer (111a) of the first covering (100a) of the thermal insulation element (200).

**Patentansprüche**

1.  Eine Abdeckung (100), die zum Schutz eines Kerns (210) einer Dämmplatte (200) eines äußeren Wärmedämm-Verbundsystems geeignet ist, wobei die Abdeckung (100) Folgendes aufweist:

    - eine Basisstruktur (110), die eine faserige Vliesschicht (111) aufweist,
    - eine Polymer-Mehrschichtstruktur (120), die mit der Basisstruktur (110) verbunden ist, wobei die Polymer-Mehrschichtstruktur (120) Folgendes aufweist:

        • eine erste Binde-Polymerschicht (122),
        • eine zweite Binde-Polymerschicht (123), und
        • eine Kernschicht (121) zwischen der ersten Binde-Polymerschicht (122) und der zweiten Binde-Polymerschicht (123), wobei die Kernschicht (121)

            ∘ aus Polymermaterial hergestellt ist,
            ∘ eine spezifische Masse von mindestens 1 g/m$^2$ hat, und
            ∘ durch Gießen, Extrusion oder Koextrusion erhältlich ist, wobei

        • die erste Binde-Polymerschicht (122), die zweite Binde-Polymerschicht (123) und die Kernschicht (121) miteinander verbunden sind, wobei

    - die Abdeckung (100) eine erste Oberfläche (130) und eine entgegengesetzte zweite Oberfläche (140) umfasst, wobei die Abdeckung (100) so angeordnet ist, dass
    - die faserige Vliesschicht (111) die erste Oberfläche (130) der Abdeckung (100) umfasst, wobei
    - ein Putz (425) auf die erste Oberfläche (130) der Abdeckung (100) aufgetragen werden kann,
    - die zweite Oberfläche (140) der Abdeckung (100) an einem Kern (210) eines Wärmedämmelements (200) befestigt werden kann, und
    - die Abdeckung (100) zumindest zu einem gewissen Ausmaß gasdicht ist, **dadurch gekennzeichnet, dass**
    - die Kernschicht (121) mindestens einen von Ethylen-Vinylalkohol (EVOH) und Polyvinylalkohol (PVA) aufweist und
    - (i) die Polymer-Mehrschichtstruktur (120) durch Koextrusion erhältlich ist oder (ii) neben der Kernschicht (121) auch die Binde-Polymerschichten (122, 123) der Polymer-Mehrschichtstruktur (120) durch Gießen oder Extrusion erhältlich sind, und
    - die Polymer-Mehrschichtstruktur (120) ein spezifisches Gewicht von mindestens 20 g/m$^2$ aufweist

2.  Abdeckung (100) gemäß Anspruch 1, wobei

    - die erste Binde-Polymerschicht (122) oder eine auf Polyethylen (PE) basierende Schicht (124) der Polymer-Mehrschichtstruktur (120) die zweite Oberfläche (140) der Abdeckung (100) aufweist.

3.  Abdeckung (100) gemäß Anspruch 1 oder 2, wobei

    - die spezifische Masse des Kerns (121) mindestens 2 g/m$^2$, optional höchstens 8 g/m$^2$ beträgt, wobei
    - die Sauerstoffdurchlässigkeitsrate (OTR) der Abdeckung (121), wie in der Norm ASTM 3985 beschrieben, bei einer Temperatur von 23 °C, einem Druck von 1 atm und einer relativen Luftfeuchtigkeit von 50 % höchstens 4,5 ml/m$^2$/Tag beträgt.

4.  Abdeckung (100) gemäß einem der Ansprüche 1 bis 3, wobei

    - die erste Binde-Polymerschicht (122) mindestens eines der folgenden aufweist:

        • Polyethylen (PE), wie z. B. Polyethylen niedriger Dichte (LDPE) oder Polyethylen hoher Dichte (HDPE),
        • Polypropylen (PP), und
        • ein Copolymer, Terpolymer oder ein lonomer, das lineares Polyethylen niedriger Dichte (LLDPE), Polyethylen niedriger Dichte (LDPE) aufweist;

    wahlweise
    - auch die zweite Binde-Polymerschicht (123) mindestens eines der folgenden umfasst:

        • Polyethylen (PE), wie z. B. Polyethylen niedriger Dichte (LDPE) oder Polyethylen hoher Dichte (HDPE),
        • Polypropylen (PP), und
        • ein Copolymer, Terpolymer oder ein lonomer, das lineares Polyethylen niedriger Dichte (LLDPE), Polyethylen niedriger Dichte (LDPE) aufweist.

5.  Abdeckung (100) gemäß einem der Ansprüche 1 bis 4, wobei

    - die polymere Mehrschichtstruktur (120) ein spezifisches Gewicht von höchstens 50 g/m² hat.

6. Abdeckung (100) gemäß einem der der Ansprüche 1 bis 5, wobei die Abdeckung (100) eine weitere Polymerschicht (124, 125) aufweist, die

- durch Gießen, Extrusion oder Koextrusion erhältlich ist,
- zwischen der ersten Binde-Polymerschicht (122) und der zweiten Binde-Polymerschicht (123) angeordnet ist, und
- mindestens eines der folgenden aufweist:

• Polyethylen (PE), wie z. B. Polyethylen hoher Dichte (HDPE), lineares Polyethylen niedriger Dichte (LLDPE), Polyethylen niedriger Dichte (LDPE),
• ein Metallocen auf der Basis von Polyethylen (PE),
• Polypropylen (PP),
• ein Copolymer aus Polypropylen (PP), und
• Polyamid (PA), wie PA-6 oder PA-66.

7. Abdeckung (100) gemäß einem der Ansprüche 1 bis 6, wobei

- die zweite Binde-Polymerschicht (123) zwischen der Kernschicht (121) und der Basisstruktur (110) angeordnet ist, und
- die Abdeckung (100) eine weitere Polymerschicht (124, 125, 112, 113) aufweist,

• die durch Gießen, Extrusion oder Koextrusion erhältlich ist,
• die zwischen der zweiten Binde-Polymerschicht (123) und der ersten Oberfläche (130) angeordnet ist, wodurch ein Teil der Polymer-Mehrschichtstruktur (120) oder der Basisstruktur (110) gebildet wird, und
• die mindestens eines von Binde-Polymer, Polyethylen (PE) und Polypropylen (PP) aufweist.

8. Abdeckung (100) gemäß einem der Ansprüche 1 bis 7, wobei

- die faserige Vliesschicht (111) der Basisstruktur (110) faseriges Material aufweist, das mindestens eines von Polypropylen (PP), Polyethylenterephthalat (PET) und Glas aufweist.

9. Abdeckung (100) gemäß einem der Ansprüche 1 bis 8, wobei die faserige Vliesschicht (111) der Basisstruktur (110) Folgendes aufweist:

- faseriges Polymermaterial, das mindestens eines von Polypropylen (PP) und Polyethylenterephthalat (PET) aufweist; wobei die Vliesschicht (111) eine spezifische Masse von 20 g/m² bis 200 g/m² aufweist, und/oder
- einen Glasfaserfilz mit einer spezifischen Masse von 30 g/m² bis 150 g/m².

10. Abdeckung (100) gemäß einem der Ansprüche 1 bis 9, wobei die Basisstruktur (110) ferner mindestens eines der folgenden aufweist:

- eine Polymerfolie (112, 113), wie z. B. eine Polypropylen (PP)-Folie oder eine Polyethylenterephthalat (PET)-Folie,
- eine weitere faserige Vliesschicht (114), wie z. B. ein Glasfaserfilz,
- eine gewebte Schicht (115), wie z. B. eine gewebte Polyethylen (PE)-Schicht, und
- eine Stützgaze (116), wie z.B. eine Glasfasergaze oder Polypropylengaze.

11. Abdeckung (100) gemäß einem der Ansprüche 1 bis 10, wobei

- die Polymerschichten (121, 122, 123, 124, 125, 113, 114) der Abdeckung (100), die durch Gießen, Extrusion oder Koextrusion hergestellt wurden, insgesamt ein spezifisches Gewicht von mindestens 20 g/m², gegebenenfalls höchstens 80 g/m² aufweisen, wobei
- die Wasserdampfdurchlässigkeitsrate (WVTR) gemäß der Norm ISO 2528 der Polymer-Mehrschichtstruktur (120) bei der Temperatur 23 °C, einem Druck von 1 atm und einer relativen Luftfeuchtigkeit von 50 % weniger als 1 g/m²/Tag beträgt.

12. Abdeckung (100) gemäß einem der Ansprüche 1 bis 11, aufweisend:

- etwas feuerhemmendes Material; zum Beispiel weist die Vliesschicht (111) der Basisstruktur (110) etwas feuerhemmendes Material auf und/oder die polymere Mehrschichtstruktur (120) weist etwas feuerhemmendes Material auf.

13. Ein Wärmedämmelement (200), das Folgendes aufweist:

- eine erste Abdeckung (100a) gemäß einem der Ansprüche 1 bis 12,
- eine zweite Abdeckung (100b) gemäß einem der Ansprüche 1 bis 12, und
- einen Wärmedämm-Kern (210), wobei
- der Wärmedämm-Kern (210) etwas wärmeisolierendes Material aufweist, wobei die Wärmeleitfähigkeit des wärmeisolierenden Materials gemäß der Norm EN 12667 weniger als 0,05 W/mK beträgt,
- die erste Abdeckung (100b) an dem Wärmedämm-Kern (210) angebracht wird,
- die zweite Abdeckung (100b) an dem Wärmedämm-Kern (210) angebracht wird, und
- die erste Oberfläche (130a) der ersten Abdeckung (100a) von dem Wärmedämm-Kern (210) abgewandt ist, wobei
- ein Putz (425) auf die erste Oberfläche (130a) der ersten Abdeckung (100a) aufgetragen werden kann.

**14.** Wärmedämmelement (200) gemäß Anspruch 13, wobei

- der Wärmedämm-Kern (210) Polyurethan (PU), wie z. B. starres Polyurethan (PUR), oder Polyisocyanurat (PIR) aufweist.

**15.** Eine Wand (400), aufweisend:

- das Wärmedämmelement (200) gemäß Anspruch 13 oder 14,
- eine Innenseite (410) und eine Außenseite (420),
- einen Putz (425), der auf der Außenseite (420) der Wand (400) angeordnet ist, wobei
- der Putz (425) auf der Vliesschicht (111a) der ersten Abdeckung (100a) des Wärmedämmelements (200) angeordnet ist.

**Revendications**

**1.** Revêtement (100) approprié pour protéger une âme (210) d'un panneau d'isolation (200) d'un système composite d'isolation thermique externe, le revêtement (100) comprenant

- une structure de base (110) comprenant une couche non tissée fibreuse (111),
- une structure multicouche polymère (120) assemblée à la structure de base (110), la structure multicouche polymère (120) comprenant

• une première couche de polymère de liaison (122),
• une deuxième couche de polymère de liaison (123), et
• une couche d'âme (121) entre la première couche de polymère de liaison (122) et la deuxième couche de polymère de liaison (123), la couche d'âme (121)

◦ étant réalisée en un matériau polymère,
◦ ayant une masse spécifique d'au moins 1 g/m$^2$, et

◦ pouvant être obtenue par coulée, extrusion ou coextrusion, dans lequel

• la première couche de polymère de liaison (122), la deuxième couche de polymère de liaison (123) et la couche d'âme (121) sont assemblées les unes aux autres, moyennant quoi

- le revêtement (100) comprend une première surface (130) et une deuxième surface opposée (140), le revêtement (100) étant agencé de sorte que
- la couche non tissée fibreuse (111) comprenne la première surface (130) du revêtement (100), moyennant quoi
- un rendu (425) peut être appliqué sur la première surface (130) du revêtement (100),
- la deuxième surface (140) du revêtement (100) peut être fixée à une âme (210) d'un élément d'isolation thermique (200), et
- le revêtement (100) est étanche aux gaz au moins dans une certaine mesure,

**caractérisé en ce que**

- la couche d'âme (121) comprend au moins l'un parmi l'éthylène-alcool vinylique (EVOH) et l'alcool polyvinylique (PVA) et
- (i) la structure multicouche polymère (120) peut être obtenue par coextrusion ou (ii) en plus de la couche d'âme (121), également les couches de polymère de liaison (122, 123) de la structure multicouche polymère (120) peuvent être obtenues par coulée ou extrusion, et
- la structure multicouche polymère (120) a un poids spécifique d'au moins 20 g/m$^2$.

**2.** Revêtement (100) selon la revendication 1, dans lequel

- la première couche de polymère de liaison (122) ou une couche (124) à base de polyéthylène (PE) de la structure multicouche polymère (120) comprend la deuxième surface (140) du revêtement (100).

**3.** Revêtement (100) selon la revendication 1 ou 2, dans lequel

- la masse spécifique de l'âme (121) est d'au moins 2 g/m$^2$, éventuellement d'au plus 8 g/m$^2$, moyennant quoi
- le taux de transmission d'oxygène (OTR) du revêtement (121), tel que décrit dans la norme ASTM 3985, à la température de 23°C, à la pression de 1 atm et à l'humidité relative de 50%, est d'au plus 4,5 ml/m$^2$/jour.

**4.** Revêtement (100) selon l'une des revendications 1 à 3, dans lequel

- la première couche de polymère de liaison (122) comprend au moins l'un parmi

• le polyéthylène (PE), tel que le polyéthylène basse densité (LDPE) ou le polyéthylène haute densité (HDPE),
• le polypropylène (PP), et
• un copolymère, terpolymère ou un ionomère comprenant du polyéthylène basse densité linéaire (LLDPE), du polyéthylène basse densité (LDPE) ;

éventuellement,
- également la deuxième couche de polymère de liaison (123) comprend au moins l'un parmi

• le polyéthylène (PE), tel que le polyéthylène basse densité (LDPE) ou le polyéthylène haute densité (HDPE),
• le polypropylène (PP), et
• un copolymère, terpolymère ou un ionomère comprenant du polyéthylène basse densité linéaire (LLDPE), du polyéthylène basse densité (LDPE).

**5.** Revêtement (100) selon l'une des revendications 1 à 4, dans lequel

- la structure multicouche polymère (120) a un poids spécifique d'au plus 50 g/m$^2$.

**6.** Revêtement (100) selon l'une des revendications 1 à 5, dans lequel le revêtement (100) comprend une couche de polymère (124, 125) supplémentaire qui

- peut être obtenue par coulée, extrusion ou coextrusion
- est agencée entre la première couche de polymère de liaison (122) et la deuxième couche de polymère de liaison (123), et
- comprend au moins l'un parmi

• le polyéthylène (PE), tel que le polyéthylène haute densité (HDPE), le polyéthylène basse densité linéaire (LLDPE), le polyéthylène basse densité (LDPE),
• un métallocène à base de polyéthylène (PE),
• le polypropylène (PP),
• le copolymère de polypropylène (PP), et
• le polyamide (PA), tel que PA-6 ou PA-66.

**7.** Revêtement (100) selon l'une des revendications 1 à 6, dans lequel

- la deuxième couche de polymère de liaison (123) est agencée entre la couche d'âme (121) et la structure de base (110), et
- le revêtement (100) comprend une autre couche de polymère (124, 125, 112, 113)

• pouvant être obtenue par coulée, extrusion ou coextrusion,
• agencée entre la deuxième couche de polymère de liaison (123) et la première surface (130), formant ainsi une partie de la structure multicouche polymère (120) ou de la structure de base (110), et
• comprenant au moins l'un parmi un polymère de liaison, le polyéthylène (PE) et le polypropylène (PP).

**8.** Revêtement (100) selon l'une des revendications 1 à 7, dans lequel

- la couche non tissée fibreuse (111) de la structure de base (110) comprend un matériau fibreux comprenant au moins l'un parmi le polypropylène (PP), le polyéthylène téréphtalate (PET) et le verre.

**9.** Revêtement (100) selon l'une des revendications 1 à 8, dans lequel la couche non tissée fibreuse (111) de la structure de base (110) comprend

- un matériau polymère fibreux comprenant au moins l'un parmi le polypropylène (PP) et le polyéthylène téréphtalate (PET) ; la couche non tissée (111) ayant une masse spécifique comprise entre 20 g/m$^2$ et 200 g/m$^2$, et/ou
- un feutre de fibres de verre ayant une masse spécifique comprise entre 30 g/m$^2$ et 150 g/m$^2$.

**10.** Revêtement (100) selon l'une des revendications 1 à 9, dans lequel la structure de base (110) comprend en outre au moins l'un parmi

- un film polymère (112, 113), tel qu'un film de polypropylène (PP) ou un film de polyéthylène téréphtalate (PET),
- une autre couche non tissée fibreuse (114), telle qu'un feutre de fibres de verre,
- une couche tissée (115), telle qu'une couche de polyéthylène (PE) tissée, et
- un canevas de support (116), tel qu'un canevas de fibres de verre ou un canevas de polypropylène.

**11.** Revêtement (100) selon l'une des revendications 1 à 10, dans lequel

- les couches de polymère (121, 122, 123, 124, 125, 113, 114) du revêtement (100) qui ont été

**EP 3 106 580 B1**

réalisées par coulée, extrusion ou coextrusion ont au total un poids spécifique d'au moins 20 g/m$^2$, éventuellement d'au plus 80 g/m$^2$, moyennant quoi

- le taux de transmission de vapeur d'eau (WVTR) selon la norme ISO 2528 de la structure multicouche polymère (120) est inférieur à 1 g/m$^2$/jour à la température de 23°C, à la pression de 1 atm et à l'humidité relative de 50%.

12. Revêtement (100) selon l'une des revendications 1 à 11, comprenant

- de l'ignifugeant; par exemple, la couche non tissée (111) de la structure de base (110) comprend de l'ignifugeant et/ou la structure multicouche polymère 120 comprend de l'ignifugeant.

13. Élément d'isolation thermique (200) comprenant

- un premier revêtement (100a) selon l'une des revendications 1 à 12,
- un deuxième revêtement (100b) selon l'une des revendications 1 à 12, et
- une âme thermiquement isolante (210), dans lequel
- l'âme thermiquement isolante (210) comprend du matériau thermiquement isolant, la conductivité thermique du matériau thermiquement isolant étant inférieure à 0,05 W/mK selon la norme EN 12667,
- le premier revêtement (100b) est fixé à l'âme thermiquement isolante (210),
- le deuxième revêtement (100b) est fixé à l'âme thermiquement isolante (210), et
- la première surface (130a) du premier revêtement (100a) est tournée à l'opposé de l'âme thermiquement isolante (210), moyennant quoi
- un rendu (425) peut être appliqué sur la première surface (130a) du premier revêtement (100a).

14. Élément d'isolation thermique (200) selon la revendication 13, dans lequel

- l'âme thermiquement isolante (210) comprend du polyuréthane (PU), tel du polyuréthane rigide (PUR) ou du polyisocyanurate (PIR).

15. Paroi (400) comprenant,

- l'élément d'isolation thermique (200) selon la revendication 13 ou 14,
- un côté interne (410) et un côté externe (420),
- un rendu (425) agencé sur le côté externe (420) de la paroi (400), dans lequel
- le rendu (425) est agencé sur la couche non tissée (111a) du premier revêtement (100a) de l'élément d'isolation thermique (200).

Fig. 1a

Fig. 1b

Fig. 1c

Fig. 1d

Fig. 2a

Fig. 2b

Fig. 3

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2404750 A1